# EUROPÄISCHE PATENTSCHRIFT

(11) **EP 3 869 762 B1**
(45) Veröffentlichungstag und Bekanntmachung des Hinweises auf die Patenterteilung: **03.07.2024**
(21) Anmeldenummer: 20158292.1
(22) Anmeldetag: 19.02.2020
(51) Int. Cl.: H04L 69/06, H04L 69/00, H04L 67/12

(54) **DATENÜBERMITTLUNG MIT KOMMUNIKATIONSBROKER**
DATA TRANSMISSION WITH COMMUNICATION BROKER
TRANSMISSION DES DONNÉES À L'AIDE DU COURTIER DE COMMUNICATION

(43) Veröffentlichungstag der Anmeldung: 25.08.2021
(73) Patentinhaber: Siemens Aktiengesellschaft, 80333 München (DE); Robert Bosch GmbH, 70442 Stuttgart (DE)
(72) Erfinder: Höfig, Kai, 83101 Rohrdorf (DE); Koo, Chee-Hung, 70439 Stuttgart (DE); Rothbauer, Stefan, 86156 Augsburg (DE); Schröck, Sebastian, 71263 Weil der Stadt (DE); Vorderer, Marian Marcel, 71277 Rutesheim (DE); Zeller, Marc, 81243 München (DE)
(74) Vertreter: Siemens Patent Attorneys

(56) Entgegenhaltungen:
- CN-A- 108 322 497
- Anonymous: "GitHub - forgedsoftware/measurementcommon: A json file detailing a full set of systems and their associated units.", , 27. Dezember 2014 (2014-12-27), XP055717867, Gefunden im Internet: URL:https://github.com/forgedsoftware/meas urementcommon [gefunden am 2020-07-24]

## Beschreibung

Die vorliegende Erfindung betrifft ein Verfahren zur Datenübermittlung von einem ersten Teilsystem zu einem zweiten Teilsystem, ein zur Durchführung des Verfahrens eingerichtetes System sowie dessen Komponenten.

In der CN 108322497A wird ein Verfahren zur endgeräteübergreifenden Datenübertragung offenbart.

Für die erfolgreiche Datenübermittlung von einem ersten Teilsystem zu einem zweiten Teilsystem ist es erforderlich, dass das zweite Teilsystem die Übermittelten Daten auch interpretieren kann. Insbesondere ist es erforderlichen, dass das zweite Teilsystem Kenntnis von der Datenstruktur hat oder Kenntnis von der Datenstruktur erhält. Ohne Kenntnis der Datenstruktur ist es dem zweiten Teilsystem nicht möglich, die Daten für die weitere Verarbeitung zu interpretieren.

Beispielsweise kann eine vom ersten Teilsystem (z.B. ein erster Gabelstapler) dem zweiten Teilsystem (z.B. einem zweiten Gabelstapler) übermittelte Zeichenfolge '07eb63' vom zweiten Teilsystem nur weiterverarbeitet werden, wenn das zweite Teilsystem eine Information darüber hat, dass es sich bei dieser Datenstruktur um eine Geschwindigkeit handelt, die in der Einheit ms⁻¹ angegeben ist und deren Wert im Hexadezimalsystem kodiert ist.

Üblicherweise wird die Datenstruktur, d.h. insbesondere die Information zur Variable, deren Wert übertragen wird, die Art der Kodierung des Wertes der Variablen, und die Einheit, in welcher der Wart der Variablen angegeben vorab standardisiert und ist dem ersten Teilsystem und dem zweiten Teilsystem bekannt.

Die zunehmende Digitalisierung der industriellen Produktion hat nicht nur eine deutliche Steigerung der Teilsysteme, zwischen denen Daten ausgetauscht werden müssen, zur Folge, sondern die Teilsysteme können auch verschiedenen Unternehmen zugeordnet sein. Dies macht die Entwicklung von neuen Systemen mit sich ändernden Datenstrukturen aufwendig.

Der vorliegenden Erfindung liegt die Aufgabe zugrunde, ein Verfahren zur Datenübermittlung von einem ersten Teilsystem zu einem zweiten Teilsystem sowie ein zur Durchführung des Verfahrens eingerichtetes System und dessen Komponenten anzugeben, mit welchem den oben angegebenen Anforderungen besser entsprochen werden kann.

Diese Aufgabe wurde mit dem Gegenstand der unabhängigen Patentansprüche gelöst. Vorteilhafte Ausgestaltungen sind in den abhängigen Patentansprüchen angeführt.

Vorgeschlagen wird ein Verfahren zur Datenübermittlung von einem ersten Teilsystem zu einem zweiten Teilsystem. Das Verfahren umfasst das Bereitstellen eines Datensatz durch das erste Teilsystem, wobei der Datensatz einen Datenstruktur-Identifikator und einen Datenwert aufweist, das Senden des Datensatzes an das zweite Teilsystem, das Empfangen des Datensatzes von dem zweiten Teilsystem, das Prüfen, ob eine vollständige Zuordnungsinformation zur zum Datenstruktur-Identifikator zugeordneten Datenstruktur im zweiten Teilsystem vorhanden ist, das Einholen der fehlenden Zuordnungsinformation von einem Kommunikationsbroker, wenn die vollständige Zuordnungsinformation nicht im zweiten Teilsystem vorhanden ist, und das Bestimmen der Datenstruktur basierend auf dem Datenstruktur-Identifikator und der Zuordnungsinformation.

Es ist denkbar, dass vom ersten Teilsystem ein Datensatz bereitgestellt wird, der mehrere Datenstruktur-Identifikatoren und zugehörige Datenwerte aufweist. Beispielsweise kann das erste Teilsystem ein Gabelstapler sein und einen Datensatz zur Verfügung gestellt werden, der Informationen zur Geschwindigkeit des Gabelstaplers und zur Anzahl der transportierten Paletten bereitstellt.

In einem Ausführungsbeispiel umfasst der Datenstruktur-Identifikator einen Variablen-Identifikator und die Datenstruktur eine dem Variablen-Identifikator zugeordnete Variable, wobei der Datenwert einen Wert der Variable umfasst.

Um beim Beispiel des oben genannten Gabelstaplerbeispiels zu bleiben, kann die Variable sich auf transportierte Paletten beziehen, wobei der Wert der Datenwert, den Wert dieser Variable, nämlich die Anzahl der transportierten Paletten angibt. Ferner sieht eine Ausführungsform vor, dass der Datenstruktur-Identifikator einen Einheiten-Identifikator umfasst, und dass die Datenstruktur eine dem Einheiten-Identifikator zugeordnete Einheit umfasst.

Im oben genannten Beispiel kann es sich bei der Variablen beispielsweise um die Geschwindigkeit, bei der Einheit um Meter pro Sekunde (m/s) und bei dem Datenwert um den im Hexadezimalwert angegebenen Geschwindigkeitswert.

Der Datenwert wird vor dem Senden des Datensatzes an das zweite Teilsystem verschlüsselt und der Datenwert von dem zweiten Teilsystem entschlüsselt.

Dies kann eine missbräuchliche Verwendung der Datenwerte durch ein nicht autorisiertes Teilsystem verhindern oder zumindest erschweren.

Es ist auch denkbar, eine missbräuchliche Verwendung der Datenwerte dadurch zu erschweren, dass nur einem autorisierten Teilsystem die Zuordnungsinformation vom Kommunikationsbroker zur Verfügung gestellt wird, ohne die eine Zuordnung der Datenwerte nicht möglich ist.

Gemäß der Erfindung wird von dem ersten Teilsystem eine Entschlüsselungsinformation an den Kommunikationsbroker übermittelt.

Ferner sieht die Erfindung vor, dass vor dem Entschlüsseln des Datenwerts eine Entschlüsselungsinformation von dem Kommunikationsbroker durch das zweite Teilsystem eingeholt wird.

Auf diese Weise kann die Verteilung der Entschlüsselungsinformation über einen zweiten gesicherten Weg geschehen, um das Risiko eines erfolgreichen Angriffs auf die Schlüssel zu reduzieren.

Nach einer weiteren Ausgestaltung wird der Datenwert basierend auf einer dem zweiten Teilsystem zugeordneten Verschlüsselungsinformation verschlüsselt.

Zum Verschlüsseln kann beispielsweise ein Private/Public-Key-Verfahren zur Anwendung gelangen.

Gemäß einem zusätzlichen Ausführungsbeispiel wird die dem zweiten Teilsystem zugeordnete Verschlüsselungsinformation vor dem Verschlüsseln vom Kommunikationsbroker eingeholt.

Ferner sieht eine Ausführungsform vor, dass die Entschlüsselungsinformation und/oder die Verschlüsselungsinformation eine, insbesondere zeitlich, begrenzte Gültigkeit hat.

Die zeitliche begrenzte Gültigkeit der Entschlüssungsinformation und/oder Verschlüsselungsinformation kann die Kommunikationssicherheit weiter erhöhen.

Nach einer weiteren Ausgestaltung wird der Datensatz in Echtzeit übertragen.

Gemäß einem zusätzlichen Ausführungsbeispiel wird eine Zuordnungsinformation zur zum Datenstruktur-Identifikator gehörenden Datenstruktur vom ersten Teilsystem an den Kommunikationsbroker übermittelt wird.

Dies erlaubt es dem ersten Teilsystem neue Datenstrukturen zu definieren, die von anderen Teilsystem genutzt werden können.

Ferner sieht eine Ausführungsform vor, dass der Kommunikationsbroker als verteilte Datenbank, insbesondere als Blockchain realisiert ist.

Weiter wird ein erstes Teilsystem vorgeschlagen, welches insbesondere zur Durchführung eines oben beschriebenen Verfahrens sein kann. Das erste Teilsystem ist dazu eingerichtet einen Datensatz bereitzustellen, der einen Datenstruktur-Identifikator und
einen Datenwert umfasst. Weiter ist das erste Teilsystem dazu eingerichtet, den Datensatzes an wenigstens ein zweites Teilsystem zu senden.

Das erste Teilsystem kann insbesondere den Datensatz gleichzeitig oder nacheinander an ein drittes Teilsystem senden.

Darüber hinaus wird ein zweites Teilsystem vorgeschlagen, welches insbesondere zur Durchführung eines oben beschriebenen Verfahrens eingerichtet sein kann. Das zweite Teilsystem ist dazu eingerichtet, einen Datensatz, der einen Datenstruktur-Identifikator und einen Datenwert umfasst, zu empfangen, zu prüfen, ob eine vollständige Zuordnungsinformation zur zum Datenstruktur-Identifikator zugeordneten Datenstruktur im zweiten Teilsystem vorhanden ist, die fehlenden Zuordnungsinformation von einem Kommunikationsbroker einzuholen, wenn die vollständige Zuordnungsinformation nicht im zweiten Teilsystem vorhanden ist, und die Datenstruktur basierend auf dem Datenstruktur-Identifikator und der Zuordnungsinformation zu bestimmen.

Ferner wird ein Kommunikationsbroker vorgeschlagen, welcher insbesondere zur Durchführung eines oben beschriebenen Verfahrens eingerichtet sein kann. Der Kommunikationsbroker ist dazu eingerichtet, eine Zuordnungsinformation zu der einem Datenstruktur-Identifikator zugeordneten Datenstruktur bereitzustellen.

Schließlich wird ein System mit einem oben beschriebenen ersten Teilsystem, mit einem zweiten oben beschriebenen Teilsystem und mit einem oben beschriebenen Kommunikationsbroker vorgeschlagen.

Das System kann mehr als ein einziges erstes Teilsystem und ein einziges zweites Teilsystem aufweisen. Beispielsweise kann das System ein erstes Teilsystem aufweisen, welches an zwei zweite Teilsysteme den Datensatz sendet. Ebenso kann das System ein zweites Teilsystem aufweisen, welches Datensätze von zwei ersten Teilsystemen empfängt. Grundsätzlich ist es denkbar, dass jedes Teilsystem sowohl als erstes als auch als zweites Teilsystem ausgebildet ist.

Der Kommunikationsbroker kann physisch auf mehrere Systeme verteilt sein.

In der Zeichnung zeigt:

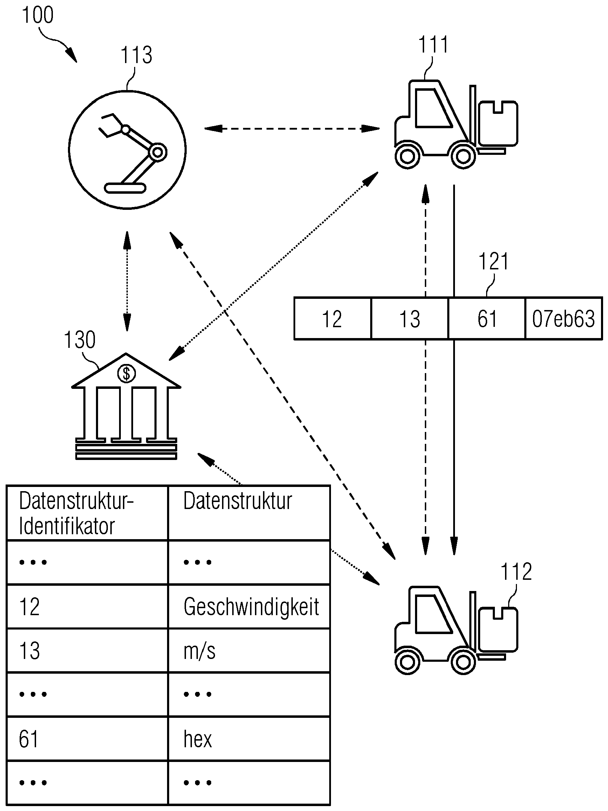

- Fig. 1: ein System mit mehreren Teilsystemen.

Das in der Fig. 1 gezeigte System 100 umfasst mehrere Teilsysteme 111, 112 und 113 zwischen den Daten übermittelt werden sollen, wie dies durch gestrichelte Linien zwischen den Teilsystemen 111, 112 und 113 angedeutet ist. Es ist denkbar, dass einige Teilsysteme nur Daten empfangen und andere Teilsysteme nur Daten senden. Typischerweise wird ein Teilsystem 111, 112 und 113 des Systems 100 allerdings sowohl Daten empfangen als auch Daten senden.

Die Teilsysteme 111, 112 und 113 können dabei unterschiedlichen Unternehmen zugeordnet sein. Im Produktionsumfeld kann es erforderlich sein, dass die Daten zwischen den Teilsystemen in Echtzeit übertragen werden müssen. Regelmäßig steht für die Datenübermittlung nur eine limitierte Bandbreite zur Verfügung.

Es kann daher vorteilhaft sein, nur die Nutzdaten zu übertragen. Dies setzt voraus, dass dem jeweils Daten empfangenden Teilsystem die Struktur der Nutzdaten bekannt ist.

Hierzu wird das oben beschriebene Verfahren vorgeschlagen, welches am Beispiel der Teilsysteme 111 und 112 erläutert werden soll, wobei das Teilsystem 111 als Beispiel eines erstes Teilsystem und das Teilsystem 112 als Beispiel eines zweiten Teilsystems dient.

Das Verfahren dient zur Datenübermittlung von dem ersten Teilsystem 111 zu dem zweiten Teilsystem 112. Hierbei wird ein Datensatz 121 von dem ersten Teilsystem 111 bereitgestellt und an das zweite Teilsystem 112 gesendet. Der Datensatz 121 umfasst mehrere Datenstruktur-Identifikatoren und einen Datenwert. In dem gezeigten Ausführungsbeispiel sind die Datenstruktur-Identifikatoren mit 12, 13 und 61 bezeichnet und der Datenwert ist '07eb63'.

Das empfangende zweite Teilsystem 112 prüft, ob eine vollständige Zuordnungsinformation zu den Datenstruktur-Identifikatoren vorliegt. Ist dies nicht der Fall, werden die fehlenden Zuordnungsinformationen von einem Kommunikationsbroker 130 eingeholt.

Das Einholen vom und das weiter unten erläuterte optionale Übermitteln einer Zuordnungsinformation an den Kommunikationsbroker 130 ist in der Fig. 1 mit gepunkteten Linien dargestellt.

Der Kommunikationsbroker 130 kann grundsätzlich von einem Unternehmen bereitgestellt werden, dem eines der Teilsysteme 111, 112 oder 113 zugeordnet ist. Üblicherweise wird der Kommunikationsbroker 130 allerdings von einer neutralen Instanz bereitgestellt werden.

In dem gezeigten Beispiel stellt der Kommunikationsbroker 130 die Zuordnungsinformationen für die Datenstruktur-Identifikatoren 12, 31 und 61 bereit. Diese Zuordnungsinformationen erlauben es dem zweiten Teilsystem 112, die vom ersten Teilsystem 111 bereitgestellten Daten zu interpretieren. Der Datenstruktur-Identifikator 12 gibt an, dass es sich bei dem Datenwert '07eb63' um eine Geschwindigkeit handelt. Der Datenstruktur-Identifikator 12 kann folglich als Variablen-Identifikator angesehen werden. Der Datenstruktur-Identifikator 13 gibt an, dass der Datenwert '07eb63' in der Einheit Meter pro Sekunde (m/s) angegeben wird. Der Datenstruktur-Identifikator 13 kann folglich als Einheiten-Identifikator angesehen werden. Schließlich gibt der Datenstruktur-Identifikator an, wie der Datenwert '07eb63' kodiert ist, nämlich als Hexadezimalwert.

Auf der Basis der Zuordnungsinformationen wird es dem zweiten Teilsystem 112 folglich möglich, die vom ersten Teilsystem 111 übermittelten Daten zu interpretieren.

Im Zuge der Weiterentwicklung der einzelnen Teilsysteme 111, 112, 133 kann es erforderlich oder wünschenswert werden, neue Datenstrukturen zu definieren. Um den anderen Teilsystemen jeweils die Möglichkeit zu geben, Datenwerte die basierend auf der neuen Datenstruktur übermittelt werden, interpretieren zu können. Wird eine Zuordnungsinformation, zu der zu einem jeweiligen neuen Datenstruktur-Identifikator zugeordneten Datenstruktur an den Kommunikationsbroker übermittelt. Über den Kommunikationsbroker ist es den anderen Teilsystemen dann möglich, die neue Zuordnungsinformation zu erhalten. Dies erlaubt es, einem Teilsystem neue Datenstrukturen zu definieren, die von anderen Teilsystem genutzt werden können.

Eine Eindeutigkeit der Zuordnungsinformation zwischen Datenstruktur-Identifikator und Datenstruktur kann dadurch erzielt werden, dass jeder Datenstruktur-Identifikator im System nur einmal vergeben wird.

## Patentansprüche

1. Verfahren zur Datenübermittlung von einem ersten Teilsystem (111) zu einem zweiten Teilsystem (112) umfassend:
Bereitstellen eines Datensatzes umfassend
einen Datenwert,
einen Datenstruktur-Identifikator zur Interpretation des Datenwerts,
durch das erste Teilsystem (111),
Senden des Datensatzes an das zweite Teilsystem (112),
Empfangen des Datensatzes von dem zweiten Teilsystem (112), Prüfen, ob eine vollständige Zuordnungsinformation zur zum Datenstruktur-Identifikator zugeordneten Datenstruktur im zweiten Teilsystem (112) vorhanden ist,
Einholen der fehlenden Zuordnungsinformation von einem Kommunikationsbroker (130), wenn die vollständige Zuordnungsinformation nicht im zweiten Teilsystem (112) vorhanden ist,
Bestimmen der Datenstruktur basierend auf dem Datenstruktur-Identifikator und der Zuordnungsinformation,
wobei von dem ersten Teilsystem (111) eine
Entschlüsselungsinformation an den Kommunikationsbroker übermittelt wird,
wobei der Datenwert vor dem Senden des Datensatzes an das zweite Teilsystem (112) verschlüsselt wird,
wobei der Datenwert von dem zweiten Teilsystem (112) entschlüsselt wird.

2. Verfahren nach Patentanspruch 1,
**dadurch gekennzeichnet,**
**dass** der Datenstruktur-Identifikator einen Variablen-Identifikator umfasst,
**dass** die Datenstruktur eine dem Variablen-Identifikator zugeordnete Variable umfasst, und
**dass** der Datenwert einen Wert der Variable umfasst.

3. Verfahren nach Patentanspruch 2,
**dadurch gekennzeichnet,**
**dass** der Datenstruktur-Identifikator einen Einheiten-Identifikator umfasst, und
**dass** die Datenstruktur eine dem Einheiten-Identifikator zugeordnete Einheit umfasst.

4. Verfahren nach einem der Patentansprüche 1 bis 3,
**dadurch gekennzeichnet,**
**dass** vor dem Entschlüsseln des Datenwerts eine Entschlüsselungsinformation von dem Kommunikationsbroker durch das zweite Teilsystem eingeholt wird.

5. Verfahren nach einem der Patentansprüche 1 bis 4,
**dadurch gekennzeichnet,**
**dass** der Datenwert basierend auf einer dem zweiten Teilsystem zugeordneten Verschlüsselungsinformation verschlüsselt wird.

6. Verfahren nach Patentanspruch 5,
**dadurch gekennzeichnet,**
**dass** die dem zweiten Teilsystem (112) zugeordnete Verschlüsselungsinformation vor dem Verschlüsseln vom Kommunikationsbroker (130) eingeholt wird.

7. Verfahren nach einem der Patentansprüche 1 bis 6,
**dadurch gekennzeichnet,**
**dass** die Entschlüsselungsinformation und/oder die Verschlüsselungsinformation eine, insbesondere zeitlich, begrenzte Gültigkeit hat.

8. Verfahren nach einem der voranstehenden Patentansprüche, **dadurch gekennzeichnet,**
**dass** der Datensatz in Echtzeit übertragen wird.

9. Verfahren nach einem der voranstehenden Patentansprüche, **dadurch gekennzeichnet,**
**dass** eine Zuordnungsinformation zur zum Datenstruktur-Identifikator gehörenden Datenstruktur vom ersten Teilsystem (111) an den Kommunikationsbroker (130) übermittelt wird.

10. Erstes Teilsystem (111), insbesondere zur Durchführung eines Verfahrens nach einem der voranstehenden Patentansprüche,
**dadurch gekennzeichnet,**
**dass** das erste Teilsystem (111) dazu eingerichtet ist,
eines Datensatz umfassend
einen Datenwert
einen Datenstruktur-Identifikator zur Interpretation des Datenwerts und
bereitzustellen,
eine Entschlüsselungsinformation an einen Kommunikationsbroker zu übermitteln,
den Datenwert vor dem Senden des Datensatzes an ein zweite Teilsystem (112) zu verschlüsseln, und
den Datensatzes an wenigstens das eine zweite Teilsystem (112) zu senden.

11. Zweites Teilsystem (112), insbesondere zur Durchführung eines Verfahrens nach einem der voranstehenden Patentansprüche 1 bis 9,
**dadurch gekennzeichnet,**
**dass** das zweite Teilsystem (112) dazu eingerichtet ist,
einen verschlüsselten Datensatz umfassend
einen Datenwert
einen Datenstruktur-Identifikator zur Interpretation des Datenwerts zu empfangen,
den Datensatz mittels einer Entschlüsselungsinformation zu entschlüsseln,
zu prüfen, ob eine vollständige Zuordnungsinformation zur zum Datenstruktur-Identifikator zugeordneten Datenstruktur im zweiten Teilsystem vorhanden ist,
die fehlende Zuordnungsinformation von einem Kommunikationsbroker (130) einzuholen, wenn die vollständige Zuordnungsinformation nicht im zweiten Teilsystem (112) vorhanden ist, und
die Datenstruktur basierend auf dem Datenstruktur-Identifikator und der Zuordnungsinformation zu bestimmen.

12. Kommunikationsbroker (130), insbesondere zur Durchführung eines Verfahrens nach einem der voranstehenden Patentansprüche 1 bis 9,
**dadurch gekennzeichnet,**
**dass** der Kommunikationsbroker (130) dazu eingerichtet ist, eine Zuordnungsinformation zu der einem Datenstruktur-Identifikator zugeordneten Datenstruktur und eine Entschlüsselunginformation an ein zweites Teilsystem bereitzustellen.

13. System mit einem ersten Teilsystem (111) nach Patentanspruch 10, mit einem zweiten Teilsystem (112) nach Patentanspruch 11 und mit einem Kommunikationsbroker (130) nach Patentanspruch 12.

## Claims

1. Method for data transmission from a first subsystem (111) to a second subsystem (112), comprising:
providing a dataset by the first subsystem (111), which dataset comprises
a data value,
a data structure identifier for interpreting the data value,
sending the dataset to the second subsystem (112),
receiving the dataset by the second subsystem (112),
checking whether full assignment information about the data structure assigned to the data structure identifier is present in the second subsystem (112),
retrieving the missing assignment information from a communication broker (130) if the full assignment information is not present in the second subsystem (112),
determining the data structure on the basis of the data structure identifier and the assignment information,
wherein the first subsystem (111) transmits decryption information to the communication broker,
wherein the data value is encrypted before the dataset is sent to the second subsystem (112),
wherein the data value is decrypted by the second subsystem (112) .

2. Method according to Patent Claim 1,
**characterized in that**
the data structure identifier comprises a variable identifier, the data structure comprises a variable assigned to the variable identifier, and
the data value comprises a value of the variable.

3. Method according to Patent Claim 2,
**characterized in that**
the data structure identifier comprises a units identifier, and the data structure comprises a unit assigned to the units identifier.

4. Method according to any of Patent Claims 1 to 3,
**characterized in that**
the second subsystem retrieves decryption information from the communication broker before the decryption of the data value.

5. Method according to any of Patent Claims 1 to 4,
**characterized in that**
the data value is encrypted on the basis of encryption information assigned to the second subsystem.

6. Method according to Patent Claim 5,
**characterized in that**
the encryption information assigned to the second subsystem (112) is retrieved from the communication broker (130) before the encryption.

7. Method according to any of Patent Claims 1 to 6,
**characterized in that**
the decryption information and/or the encryption information has a limited validity, in particular a time-limited validity.

8. Method according to any of the preceding patent claims,
**characterized in that**
the dataset is transferred in real time.

9. Method according to any of the preceding patent claims,
**characterized in that**
the first subsystem (111) transmits to the communication broker (130) assignment information about the data structure belonging to the data structure identifier.

10. First subsystem (111), in particular for carrying out a method according to any of the preceding patent claims, **characterized in that**
the first subsystem (111) is configured
to provide a dataset comprising
a data value,
a data structure identifier for interpreting the data value,
to transmit decryption information to a communication broker,
to encrypt the data value before sending the dataset to a second subsystem (112), and
to send the dataset to at least the one second subsystem (112) .

11. Second subsystem (112), in particular for carrying out a method according to any of the preceding Patent Claims 1 to 9, **characterized in that**
the second subsystem (112) is configured
to receive an encrypted dataset comprising
a data value,
a data structure identifier for interpreting the data value,
to decrypt the dataset using decryption information,
to check whether full assignment information about the data structure assigned to the data structure identifier is present in the second subsystem,
to retrieve the missing assignment information from a communication broker (130) if the full assignment information is not present in the second subsystem (112), and
to determine the data structure on the basis of the data structure identifier and the assignment information.

12. Communication broker (130), in particular for carrying out a method according to any of the preceding Patent Claims 1 to 9,
**characterized in that**
the communication broker (130) is configured to provide a second subsystem with assignment information about the data structure assigned to a data structure identifier and decryption information.

13. System having a first subsystem (111) according to Patent Claim 10, having a second subsystem (112) according to Patent Claim 11, and having a communication broker (130) according to Patent Claim 12.

## Revendications

1. Procédé de transmission de données d'un premier sous-système (111) vers un deuxième sous-système (112), comprenant les étapes :
fournir un ensemble de données comprenant :
une valeur de données,
un identifiant de structure de données permettant d'interpréter la valeur de données,
grâce au premier sous-système (111), envoyer l'ensemble de données au deuxième sous-système (112), recevoir l'ensemble de données du deuxième sous-système (112), vérifier la présence, dans le deuxième sous-système (112), d'une information d'affectation complète concernant la structure de données affectée à l'identifiant de structure de données,
récupérer les informations d'affectation manquantes auprès d'un courtier de communication (130) si les informations d'affectation complètes ne sont pas présentes dans le deuxième sous-système (112),
déterminer la structure de données en se basant sur l'identifiant de structure de données et sur les informations d'affectation,
dans lequel une information de décryptage est transmise au courtier de communication par le premier sous-système (111),
dans lequel la valeur des données est cryptée avant l'envoi de l'ensemble de données au deuxième sous-système (112),
dans lequel la valeur de données est décryptée par le deuxième sous-système (112).

2. Procédé selon la revendication 1,
**caractérisé en ce que**
l'identifiant de structure de données comprend un identifiant de variable,
la structure de données comprend une variable affectée à l'identifiant de variable, et
la valeur des données comprend une valeur de la variable.

3. Procédé selon la revendication 2,
**caractérisé en ce que**
l'identifiant de structure de données comprend un identifiant d'unité, et
la structure de données comprend une unité affectée à l'identifiant d'unité.

4. Procédé selon l'une quelconque des revendications 1 à 3,
**caractérisé en ce que**
avant le décryptage de la valeur des données, une information de décryptage est récupérée auprès du courtier de communication par le deuxième sous-système.

5. Procédé selon l'une quelconque des revendications 1 à 4,
**caractérisé en ce que**
la valeur de données est cryptée en se basant sur des informations de cryptage affectées au deuxième sous-système.

6. Procédé selon la revendication 5,
**caractérisé en ce que**
les informations de cryptage affectées au deuxième sous-système (112) sont récupérées par le courtier de communication (130) avant le cryptage.

7. Procédé selon l'une quelconque des revendications 1 à 6,
**caractérisé en ce que**
l'information de décryptage et/ou l'information de cryptage présente(nt) une validité limitée, en particulier dans le temps.

8. Procédé selon l'une quelconque des revendications précédentes,
**caractérisé en ce que**
l'ensemble de données est transmis en temps réel.

9. Procédé selon l'une quelconque des revendications précédentes,
**caractérisé en ce que**
une information d'affectation concernant la structure de données appartenant à l'identifiant de structure de données est transmise au courtier de communication (130) par le premier sous-système (111).

10. Premier sous-système (111), en particulier permettant de mettre en oeuvre un procédé selon l'une quelconque des revendications précédentes,
**caractérisé en ce que**
le premier sous-système (111) est conçu afin de :
fournir un ensemble de données comprenant :
une valeur de données,
un identifiant de structure de données permettant d'interpréter la valeur des données,
transmettre une information de décryptage à un courtier de communication,
crypter la valeur des données avant l'envoi de l'ensemble de données à un deuxième sous-système (112), et
envoyer l'ensemble de données au moins au deuxième sous-système (112).

11. Deuxième sous-système (112), en particulier permettant de mettre en oeuvre un procédé selon l'une quelconque des revendications précédentes 1 à 9,
**caractérisé en ce que**
le deuxième sous-système (112) est conçu afin de :
recevoir un ensemble de données cryptées comprenant :
une valeur de données,
un identifiant de structure de données permettant d'interpréter la valeur des données,
décrypter l'ensemble de données au moyen d'une information de décryptage,
vérifier la présence, dans le deuxième sous-système, d'une information d'affectation complète concernant la structure de données affectée à l'identifiant de structure de données,
récupérer les informations d'affectation manquantes auprès d'un courtier de communication (130) si les informations d'affectation complètes ne sont pas présentes dans le deuxième sous-système (112), et
déterminer la structure de données en se basant sur l'identifiant de structure de données et sur les informations d'affectation.

12. Courtier de communication (130), en particulier permettant de mettre en oeuvre un procédé selon l'une quelconque des revendications précédentes 1 à 9,
**caractérisé en ce que**
le courtier de communication (130) est conçu afin de fournir à un deuxième sous-système une information d'affectation, concernant la structure de données affectée à un identifiant de structure de données, et une information de décryptage.

13. Système comprenant un premier sous-système (111) selon la revendication 10, un deuxième sous-système (112) selon la revendication 11 et un courtier de communication (130) selon la revendication 12.
